# EUROPÄISCHE PATENTSCHRIFT

(11) **EP 1 603 762 B1**
(45) Veröffentlichungstag und Bekanntmachung des Hinweises auf die Patenterteilung: **18.04.2007**
(21) Anmeldenummer: 03782188.1
(22) Anmeldetag: 10.11.2003
(51) Int. Cl.: B60H 1/00, B60H 1/32

(54) **KLIMAANLAGE FÜR EIN FAHRZEUG UND ZUGEHÖRIGES BETRIEBSVERFAHREN**
AIR-CONDITIONING SYSTEM FOR A VEHICLE AND CORRESPONDING OPERATING METHOD
CLIMATISATION DE VEHICULE ET MODE D'EXPLOITATION ASSOCIE

(30) Priorität: 25.02.2003 DE 10308254
(43) Veröffentlichungstag der Anmeldung: 14.12.2005
(73) Patentinhaber: Behr GmbH & Co. KG, 70469 Stuttgart (DE)
(72) Erfinder: BUREAU, Cathy, 70195 Stuttgart (DE); LOCHMAHR, Karl, 71665 Vaihingen (DE); MORGENSTERN, Stefan, 70499 Stuttgart (DE)
(74) Vertreter: Mantel, Berthold Friedrich
(86) Internationale Anmeldenummer: PCT/EP2003/012497
(87) Internationale Veröffentlichungsnummer: WO 2004/076212

(56) Entgegenhaltungen:
- EP-A- 0 995 621
- EP-A- 1 302 344
- DE-A- 10 156 944
- US-A1- 2002 134 093

## Beschreibung

Die Erfindung bezieht sich auf eine Klimaanlage zum Führen und Konditionieren eines Luftstroms mit einem Steuergerät zur Steuerung eines in einem Strömungskanal für einen zu konditionierenden Luftstrom angeordneten sowie in einem Kältemittelkreislauf geschalteten Verdampfers und mit einer ersten Stelleinrichtung zur Regulierung des Luftdurchsatzes im Verdampfer und einer zweiten Stelleinrichtung zur Regulierung der Luftansaugung im Strömungskanal. Unter Luftdurchsatz wird hierbei das pro Zeiteinheit einen vorgegebenen Strömungsquerschnitt durchströmende Luftvolumen verstanden. Unter Luftansaugung wird hierbei die aus der Fahrzeugumgebung und/oder dem Fahrzeuginnenraum angesaugte Umgebungsluft (auch Frischluft genannt) oder Innenraumluft (auch Umluft genannt) verstanden. Des Weiteren betrifft die Erfindung ein Verfahren zum Betrieb einer derartigen Klimaanlage.

Eine derartige Klimaanlage wird insbesondere in einem Kraftfahrzeug eingesetzt. Der Kältemittelfluss wird hierbei üblicherweise von einem in den Kältemittelkreislauf geschalteten Kompressor erzeugt, welcher unmittelbar von einem Fahrzeugmotor angetrieben wird. Der Kältemittelfluss kommt somit zum Erliegen, sobald der Fahrzeugmotor abgeschaltet wird. Entsprechend ist eine herkömmliche Fahrzeug-Klimaanlage auch nur bei laufendem Fahrzeugmotor funktionstüchtig. Dies ist insbesondere problematisch bei einer Klimaanlage, die zum Einsatz in einem besonders verbrauchsarmen Kraftfahrzeug vorgesehen ist. Zur Reduzierung des Kraftstoffverbrauchs ist bei einem solchen Fahrzeug ein so genannter Idle-Stop-Betrieb üblich. Darunter wird ein Betrieb des Fahrzeugs verstanden, bei dem der Motor bei vorübergehendem Stillstand des Fahrzeugs, beispielsweise beim Halten an einer Ampel, vorübergehend abgeschaltet wird. Eine für ein solches Fahrzeug geeignete Klimaanlage muss in der Lage sein, den Fahrzeuginnenraum auch dann zu klimatisieren, wenn der Motor vorübergehend abgeschaltet ist.

Bei einer aus der DE 101 56 944 A1 bekannten Vorrichtung ist zur Überwindung dieses Problems ein zweigeteilter Verdampfer vorgesehen. Dieser Verdampfer umfasst zusätzlich zu einem herkömmlichen Verdampfersegment ein weiteres Verdampfersegment, das ein bei Raumtemperatur flüssiges Kältespeichermedium enthält. Letzteres Verdampfersegment dient einerseits wie ein herkömmlicher Kältemittelverdampfer zur direkten Kühlung der durchströmenden Luft durch das verdampfende Kältemittel. Andererseits wird im Normalbetrieb des Kraftfahrzeugs, also bei laufendem Motor, ein Teil der Kälteleistung herangezogen, um das Kältespeichermedium einzufrieren und somit "Kälte" zu speichern. Die gespeicherte Kälte wird im Idle-Stop-Zustand, also bei vorübergehend ausgeschaltetem Motor, zur weiteren Kühlung des Luftstroms herangezogen. Hierbei wird der durch den Verdampfer strömenden Luft durch das wieder auftauende Kältespeichermedium Wärme entzogen. Zur Optimierung der Betriebseigenschaften dieser Klimaanlage ist eine dem Verdampfer vorgeschaltete Luftklappe vorgesehen, mit der wahlweise das Verdampfersegment oder das Speicherverdampfersegment des Verdampfers für den Luftstrom abgesperrt werden können. In einem Belademodus ist hierbei bei laufendem Motor das Speicherverdampfersegment abgesperrt, so dass im Speicherverdampfersegment die volle Kühlleistung zum Einfrieren des Kältespeichermediums zur Verfügung steht. Der Luftstrom wird während dieser Zeit durch das Verdampfersegment geleitet. Während des Idie-Stop-Zustands wird die Klimaanlage hingegen in einem Entladezustand betrieben, in welchem das Verdampfersegment für den Luftstrom abgesperrt ist, und dieser zur Rückgewinnung der gespeicherten "Kälte" durch das Speicherverdampfersegment geleitet wird.

Bei einer alternativen, aus der EP 0 995 621 A2 bekannten Lösung wird vorgeschlagen, den Verdampfer durch kondensierende Luftfeuchtigkeit zu vereisen und damit eine Art Eisspeicher zu erzeugen. Im Idle-Stop-Zustand wird die Luft dann durch das tauende Eis abgekühlt. Die Verwendung von kondensierter Luftfeuchtigkeit als Kältespeichermedium ist insofern ungünstig, als der Verdampfer aufgrund des niedrigen Taupunkts von Wasser eine vergleichsweise hohe Kühlleistung aufweisen muss, damit überhaupt eine nennenswerte Kondensation und Eisbildung stattfindet. Weiterhin hängt die Speichereigenschaft des bekannten Verdampfers von der Luftfeuchtigkeit der Umgebungsluft ab. Bei "ungünstigen", d.h. trockenen Klimabedingungen ist damit zu rechnen, dass nicht genug Wasser für ein effektive Kältespeicherung anfällt. Schließlich führt eine Vereisung des Verdampfers in unerwünschter Weise zu einer Erhöhung des Strömungswiderstandes der Klimaanlage.

Zur Reduzierung des Kraftstoffverbrauchs ist es daneben bekannt, die umgesetzte Kälteleistung des Kältekreislaufs nach Bedarf zu steuern und/oder zu regeln. Hierzu wird, wie beispielsweise aus der EP 0 995 621 A2 bekannt, die Luftaustrittstemperatur aus dem Verdampfer auf einen möglichst hohen Wert eingestellt. Alternativ oder zusätzlich kann der Luftdurchsatz oder Luftmassenstrom reduziert oder die Luft mit möglichst niedriger Enthalpie angesaugt werden. Dabei ist die Luftaustrittstemperatur nach oben hin, zumeist auf einen festen niedrigen Wert begrenzt, bedingt durch mögliche Instabilitäten des Kühl- und/oder Kältemittelkreislaufs, Geruchsbildung bei zu hohen Temperaturen und der Forderung nach Lufttrocknung durch Taupunktsunterschreitung. Die übliche Luftaustrittstemperatur am Verdampfer liegt zwischen dem Gefrierpunkt von Wasser und ca. 12°C bis 14°C.

Der Erfindung liegt die Aufgabe zugrunde, eine besonders einfache Klimaanlage für ein Kraftfahrzeug anzugeben, die auch bei vorübergehend ausgeschaltetem Fahrzeugmotor eine Abkühlung eines Luftstroms erlaubt. Der Erfindung liegt ferner die Aufgabe zugrunde, ein Verfahren für den Betrieb einer solchen Klimaanlage anzugeben.

Die Aufgabe bezüglich der Klimaanlage wird erfindungsgemäß gelöst durch die Merkmale des unabhängigen Anspruchs 1. Danach umfasst die Klimaanlage zur Führung und Konditionierung eines Luftstroms mehrere Komponenten, die mittels eines Steuergeräts motorzustandsabhängig einstellbar sind. Als Komponenten sind im Strömungskanal der Klimaanlage ein Gebläse zur Erzeugung eines Luftstroms sowie ein an einen Kältemittelkreislauf angeschlossener Verdampfer, insbesondere ein Verdampfer mit einem Speicherverdampfersegment und einem weiteren Verdampfersegment ohne nennenswerte Kältespeicherwirkung vorgesehen. Bei dem Verdampfer mit dem Speicherverdampfersegment ist der Kältemitteleinlass des Verdampfers bevorzugt im Bereich des Speicherverdampfersegments angeordnet. Weiterhin ist eine erste Stelleinrichtung vorgesehen, durch welche der Luftdurchsatz im Verdampfer bedarfsgerecht regulierbar, insbesondere im Verdampfersegment sowie im Speicherverdampfersegment bedarfsgerecht selektiv absperrbar ist. Zur Bereitstellung des zu konditionierenden Luftstroms und somit zur Einstellung der mittels Luftansaugung von innen und/oder von außen einströmenden Luftmenge ist eine zweite Stelleinrichtung vorgesehen. Dabei bestimmt das Steuergerät in der einfachsten Ausführungsform anhand eines erfassten Motorzustandssignals einen Sollwert für die Verdampfer-Austrittstemperatur, anhand dessen mindestens eine der Steuereinrichtungen - für den Luftdurchsatz durch den Verdampfer oder den Luftstrom für die Luftansaugung - steuerbar ist. Zusätzlich zur Bestimmung des Sollwertes für die VerdampferAustrittstemperatur anhand des Motorzustandssignals bestimmt das Steuergerät den Sollwert auch in Abhängigkeit von der Außentemperatur, der Innenraumtemperatur und einem vorgegebenen Sollwert für die Innenraumtemperatur.

Bezüglich eines Verfahrens zum Betrieb der Klimaanlage wird die Aufgabe erfindungsgemäß gelöst durch die Merkmale des Anspruchs 7. Danach wird anhand des Motorzustandssignals ein Sollwert für die Verdampfer-Austrittstemperatur bestimmt wird, anhand dessen der Luftdurchsatz durch einen Verdampfer und/oder die Luftansaugung eingestellt wird. Zusätzlich kann der Sollwert für die Verdampfer-Austrittstemperatur auch in Abhängigkeit von der Außentemperatur, der Innenraumtemperatur sowie von einem vorgegebenen Sollwert für die Innenraumtemperatur bestimmt werden.

Mit anderen Worten: Das Steuergerät stellt in Abhängigkeit vom Betrieb des Motors sowie zusätzlich in Abhängigkeit von der als Einflußgrößen erfassten Außentemperatur, Innenraumtemperatur und von dem vorgegebenen Sollwert für die Innenraumtemperatur die Klimaanlage durch Bildung eines Sollwerts für die Verdampfer-Austrittstemperatur selbständig ein, indem der Sollwert für die Verdampfer-Austrittstemperatur mit dem Istwert der Verdampfer-Austrittstemperatur verglichen wird und die festgestellte Differenz im Steuergerät adaptiv Stellgrößen, z.B. AN-, AUS-Signale, oder variable Stellgrößen für die Luftdurchsatzregelung des Verdampfers, für die Luftansaugregelung sowie für die Kältemittelverdichter-Regelung erzeugt.

Dazu wird anhand von Initialisierungssignalen des Fahrzeugs dessen Betriebszustand zweckmäßigerweise anhand einer messbaren Größe, wie z.B. Motorstart oder Motorstopp erfasst. Des Weiteren werden die Außen- oder Umgebungstemperatur, die Innenraumtemperatur sowie die gewünschte, vom Fahrzeuginsassen eingestellte Innenraumtemperatur bestimmt und in der Art einer adaptiven Steuerung zur Einstellung des Luftdurchsatzes durch den Verdampfer und/oder der Luftansaugung der Klimaanlage verwendet. Je nach Art und Ausführung des Steuergeräts kann die Adaption direkt oder indirekt, d.h. anhand von erfassten Fahrzeugsignalen bzw. anhand von aus erfassten Fahrzeugsignalen mittels Modelldaten gebildeten Referenzsignalen ausgeführt werden. Ein derartiges adaptives System zur Steuerung des Luftdurchsatzes durch den Verdampfer und/oder der Luftansaugung ermöglicht eine möglichst lange, sichere und selbständige Nutzung der Kältespeicherwirkung des Verdampfers auch bei einem Motorstillstand, so dass nach Abschalten des Motors und somit des Kältemittelverdampfers möglichst lange noch ausreichend abgekühlte und entfeuchtete Luft in den Fahrzeuginnenraum geführt werden kann. Somit eignet sich eine derartige Klimaanlage und ein derartiges Betriebsverfahren auch zur Verwendung in einem Fahrzeug mit sogenanntem Idle-Stop-Betrieb.

Für eine möglichst feinstufige und möglichst lang anhaltende Nutzung der Kältespeicherwirkung des Verdampfers auch beim abgeschalteten Motor wird als Führungsgröße ein erster Maximalwert und ein zweiter Maximalwert der Verdampfer-Austrittstemperatur bestimmt, wobei der zweite Maximalwert größer als der erste Maximalwert ist. Um eine besonders effektive und Energie sparende Kühlung des Luftstroms zu ermöglichen, ist das Steuergerät mit der ersten Stelleinrichtung zum luftseitig zumindest teilweise Sperren oder Öffnen des Verdampfers verbunden. Hierdurch kann der Luftdurchsatz durch den segmentierten Verdampfer selektiv, z.B. für ein Speicherverdampfersegment und für ein Verdampfersegment mittels der beispielsweise als eine Absperrvorrichtung ausgebildeten Stelleinrichtung unabhängig voneinander, und adaptiv in Abhängigkeit vom aktuellen Motorbetriebszustand reguliert werden. Eine zweckmäßige Realisierung einer dafür geeigneten Absperrvorrichtung umfasst zwei Luftklappen, von denen einer zur Strömungsregulierung bzw. -absperrung im Speicherverdampfersegment dient und die andere zur Strömungsregulierung oder -absperrung im Verdampfersegment bestimmt ist. Weitere Luftklappen oder mehrteilig ausgeführte Luftklappen sind optional vorgesehen. Die Luftklappen können stromauf oder stromab des Verdampfers angeordnet sein.

Vorzugsweise wird der Verdampfer, insbesondere ein Kältemittelverdampfer, mittels des Steuergeräts kontinuierlich oder schrittweise gesperrt und/oder geöffnet. Dabei wird bei laufendem Motor und somit bei ausreichendem Kältemittelfluss in der Klimaanlage der durch das Speicherverdampfersegment strömende Luftstrom durch die Absperrvorrichtung reduziert oder abgesperrt und entsprechend durch das Verdampfersegment geführt, hierdurch reduziert sich der im Speicherverdampfersegment auftretende Wärmetransfer an das Kältemittel drastisch. Infolge dessen sinkt die Verdampfungsrate des Kältemittels im Speicherverdampfersegment, so dass sich in diesem Bereich flüssiges Kältemittel ansammelt. Bricht, z.B. beim Abschalten des Fahrzeugmotors, der Kältemittelfluss im Kältemittelkreislauf zusammen, so wird mittels des Steuergeräts der Luftstrom vom Verdampfersegment auf das Speicherverdampfersegment umgeleitet. Hierdurch wird die Kühlleistung des Verdampfers so lange aufrechterhalten, bis das angesammelte Kältemittel restlos verdampft ist. Durch eine Anordnung des Speichersegments am Kältemitteleinlass ist die Effizienz dieser "Nachverdampfung", die in geringem Umfang auch in einem herkömmlichen Verdampfer auftritt, derart verbessert, dass sie zur Aufrechterhaltung der Klimatisierung während einer Idle-Stop-Phase herangezogen werden kann. Insbesondere ist dabei der Einsatz eines zusätzlichen Kältespeichermediums möglich, aber nicht mehr zwingend erforderlich.

Durch die motorzustandsabhängige und temperaturabhängige, insbesondere von der Verdampfer-Austrittstemperatur abhängige Steuerung des Kältemittelstroms und/oder des Kältemittelverdichters ist eine besonders feinstufige und kraftstoffsparende Kühlung des Luftstroms sowohl im Betrieb des Fahrzeugs als auch im Fahrzeugstillstand ermöglicht. Bedingt durch die Berücksichtigung der Fahrzeugfunktion in Kombination mit der Berücksichtigung der Innen-, Außen- und Verdampfer-Austrittstemperatur ist eine gegenüber herkömmlichen Verfahren effektive Kühlung des Luftstroms bei einem Fahrzeugstillstand, insbesondere im sogenannten Idle-Stop-Modus, ermöglicht.

Ausführungsbeispiele der Erfindung werden anhand einer Zeichnung näher erläutert. Darin zeigen:
- Figur 1a und 1b: einen Verdampfer einer zur Durchführung des Verfahrens geeigneten Fahrzeug-Klimaanlage,
- Figur 2: in schematischer Querschnittsdarstellung jeweils eine Einrichtung zum Abkühlen und Wiederaufheizen von Luft in einer Fahrzeug-Klimaanlage in verschiedenen Betriebsmoden,
- Figur 3: in schematischer Darstellung ein Steuergerät zur Steuerung der Fahrzeug-Klimaanlage,
- Figur 4: schematisch ein Luftmengen-Temperatur-Zeit-Diagramm zur Darstellung von verschiedenen Betriebsmoden der Klimaanlage, und
- Figur 5: in Tabellenform den funktionalen Zusammenhang des Sollwerts der Verdampfer-Austrittstemperatur und des Motorzustandssignals sowie zusätzlich der Außentemperatur, der Innenraumtemperatur und des Sollwerts für die Innenraumtemperatur.

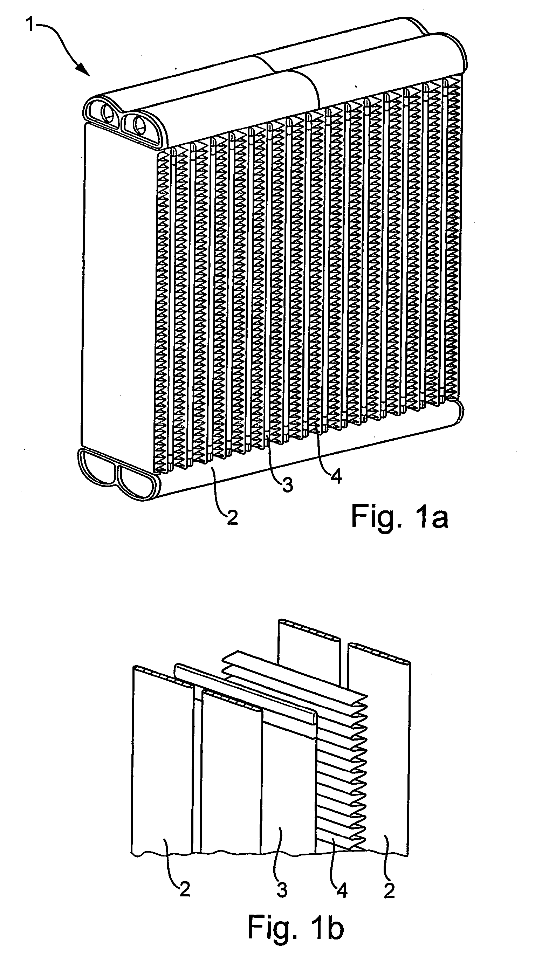

Die Figuren 1a und 1b zeigen in perspektivischer Darstellung beziehungsweise ausschnittsweise in einer Explosionsdarstellung einen zur Durchführung des erfindungsgemäßen Verfahrens geeigneten, als Speicherverdampfer ausgebildeten Verdampfer 1. Der grundsätzliche Aufbau eines solchen Speicherverdampfers ist beispielsweise aus der DE 101 56 944 A 1 bekannt. Der Verdampfer 1 beinhaltet als Teil einer nicht weiter dargestellten Fahrzeug-Klimaanlage eine Anzahl Flachrohre 2, einen Kältespeicher 3 und Wellrippen 4, welche in der genannten Reihenfolge derart aneinander liegen, dass zu kühlende Luft durch die Wellrippen 4 hindurch den Verdampfer 1 durchströmen kann. Die Flachrohre 2 sind dabei von verdampfendem Kältemittel, beispielsweise R 134a durchströmt. Die jeweils an ein Flachrohr 2 angekoppelten Kältespeicher 3 sind als Latentkältespeicher (im weiteren als Latentkältespeicher 3 bezeichnet) ausgebildet und mit einem Latentmedium, beispielsweise Decanol oder Tetradecan, als Wärmespeichermedium befüllt. Die genannten Latentmedien haben den Vorteil, dass beim Einfrieren keine Volumenvergrößerung erfolgt. Anstelle der im Ausführungsbeispiel nach Fig. 1 a, 1b vorgesehenen flachen Latentkältespeicher 3 können auch beliebige andere, mit einem Latentmedium gefüllte Kältespeicher, beispielsweise in Form von zwischen den Rohren 2 des Verdampfers 1 angeordneten, insbesondere eingeklemmten Kapseln, oder ein segmentierter Kältespeicher ohne Latentmedium vorgesehen sein.

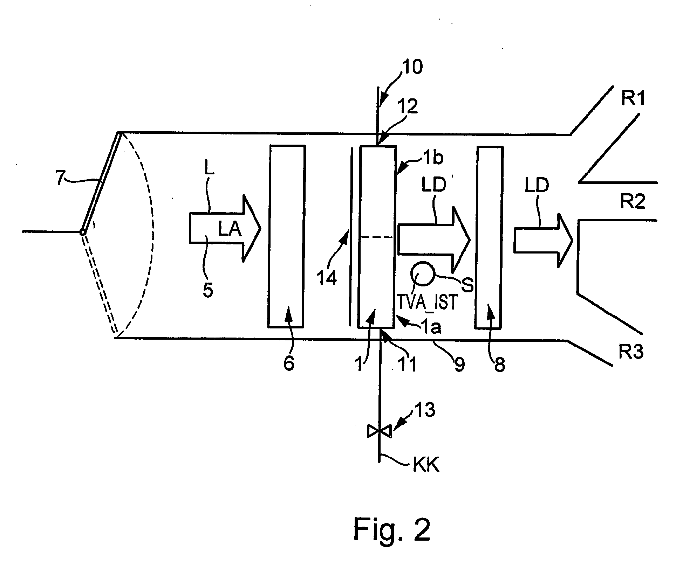

Die Figur 2 veranschaulicht beispielhaft ein Verfahren zur Abkühlung und zumindest teilweisen Wiederaufheizung eines den Verdampfer 1 durchströmenden Luftstroms L (im weiteren Luft L genannt). Die Luft L, welche den Verdampfer 1 in mit Pfeilen gekennzeichneter Strömungsrichtung 5 durchströmt, ist beispielsweise zur Temperierung dreier Belüftungsräume R1, R2, R3 im Fahrzeuginnenraum vorgesehen. Zur Verdampfungstemperaturregelung und Leistungsanpassung der Klimaanlage ist des Weiteren dem Verdampfer 1 ein Gebläse 6 zur Erzeugung des Luftstroms L und der Luftansaugung LA eingesetzt, dessen Leistung variiert werden kann. Zur Einstellung der gewünschten Temperatur in den Belüftungsräumen R1, R2 und R3 kann die gesamte den Verdampfer 1 durchströmende Luft L anschließend zusätzlich einem Heizkörper 8 zugeleitet werden.

Im Betrieb der Klimaanlage ist zur differenzierten Luftansaugung LA, d.h. zur Ansaugung von Frischluft oder Außenluft FF aus der Umgebung bzw. zur Ansaugung von Umluft oder Innenluft IF aus dem Fahrzeuginnenraum, eine erste Stelleinrichtung 7 strömungseingangsseitig im Strömungskanal 9 vor dem Gebläse 6 angeordnet. Zur Kühlung des im Strömungskanal 9 einströmenden Luftstroms L ist der Verdampfer 1 in einen schematisch angedeuteten Kältemittelkreislauf 10 geschaltet, in dem ein nicht näher dargestellter, vom Fahrzeugmotor angetriebener Kompressor (auch Kältemittelverdichter genannt) einen Kältemittelstrom KK erzeugt. Je nach Art und Ausführung des Verdampfers 1 kann dieser segmentiert ausgebildet sein. Beispielsweise umfasst der Verdampfer 1 zwei in Strömungsrichtung 5 gesehen nebeneinander geschaltete Segmente 1a und 1b. Beide Segmente 1a und 1b sind nach Art eines gewöhnlichen, in Fahrzeug-Klimaanlagen eingesetzten Kältemittelverdampfers (vgl. z.B. Kraftfahrtechnisches Taschenbuch/Bosch [Chefredakteur H. Bauer], 23. Aufl., Braunschweig (Viebig), 1999, S. 777 ff.) ausgebildet, bei dem dem durchströmenden Luftstrom L durch Verdampfung des Kältemittels KK Wärme entzogen wird.

Der Verdampfer 1 ist derart in den Kältemittelkreislauf 10 geschaltet, dass der Kältemitteleinlass 11, d.h. die Stelle, an der das Kältemittel KK in den Verdampfer 1 eintritt, im Bereich des nachfolgend als Speicherverdampfersegment 1a bezeichneten ersten Segments 1a liegt. Das Kältemittel KK durchläuft in nicht näher dargestellter Weise zunächst das Speicherverdampfersegment 1a, danach das nachfolgend als Verdampfersegment 1b bezeichnete zweite Segment 1b und verlässt den Verdampfer 1 an einem, im Bereich des Verdampfersegments 1b angeordneten Kältemittelauslass 12. Die Verdampfungstemperatur im Verdampfer 1 wird dabei durch eine mittels eines Kältemittelventils 13 oder eines nicht näher dargestellten Kältemittelverdichters ausgeführte Steuerung der Zuführung des Kältemittels KK derart geregelt, dass das Latentmedium stets gefroren bleibt und somit dessen Schmelzenthalpie bei vorübergehendem Stillstand des Kältemittelkreislaufes 10, insbesondere im Idie-Stop-Betrieb, nutzbar ist. Gleichzeitig ist die Verdampfungstemperatur nach unten auf einen Wert knapp über 0°C begrenzt, um eine Verdampfervereisung zu verhindern. Zur Überwachung der Verdampfer-Austrittstemperatur TVA ist daher in Strömungsrichtung 5 der Luft L gesehen am Ausgang des Verdampfers 1 ein Sensor S vorgesehen.

Zur Steuerung des Kältemittelstroms KK, z.B. thermostatisch, druckgesteuert und/oder temperaturgesteuert, ist beispielsweise das Kältemittelventil 13, z.B. ein Expansionsventil zwischen Hochdruckseite und Verdampfereintritt - Kältemitteleinlass 11 - angeordnet. Durch eine derartige Anordnung des Kältemittelventils 13 ist eine schnelle und bedarfsgerechte Einstellung des Kältemittelstroms KK ermöglicht. Alternativ oder zusätzlich kann der Kältemittelstrom KK über einen nicht näher dargestellten herkömmlichen Kältemittelverdichter eingestellt werden.

Zur erfindungsgemäßen Regulierung des durch den Verdampfer 1 strömenden Luftstroms L ist dem Verdampfer 1 in Strömungsrichtung 5 gesehen eine zweite Stelleinrichtung 14 zum zumindest teilweisen luftseitigen Sperren oder Öffnen des Verdampfers 1 vorgeschaltet. Je nach Art und Ausführung der als Absperrvorrichtung ausgebildeten zweiten Stelleinrichtung 14 kann es sich dabei um eine einzelne Luftklappe oder um eine je Segment 1a und 1 b zugehörige Luftklappe oder ein flexibles, z.B. textiles Rollband mit strömungsdurchlässigen und strömungsdichten Bereichen handeln. Die zweite Stelleinrichtung 14 ist dabei derart dimensioniert, dass diese bezüglich der Hauptströmungsrichtung 5 durch Schwenken der Luftklappe/n bzw. durch Verschieben des Rollbandes zumindest teilweise oder ganz eines der Segmente 1a oder 1b öffnet bzw. verschließt, so dass ein entsprechend gewünschter Luftdurchsatz LD im zugehörigen Segment 1a bzw. 1b einstellbar ist. Bevorzugt ist dabei der Luftdurchsatz LD in beiden Segmenten 1a und 1 b unabhängig voneinander einstellbar.

Je nach Art und Ausbildung können noch weitere alternative Strukturen für eine Klimaanlage vorgesehen sein, beispielsweise kann der Verdampfer 1 und der Heizkörper 8 durch einen parallel angeordneten Bypasskanal umströmt werden.

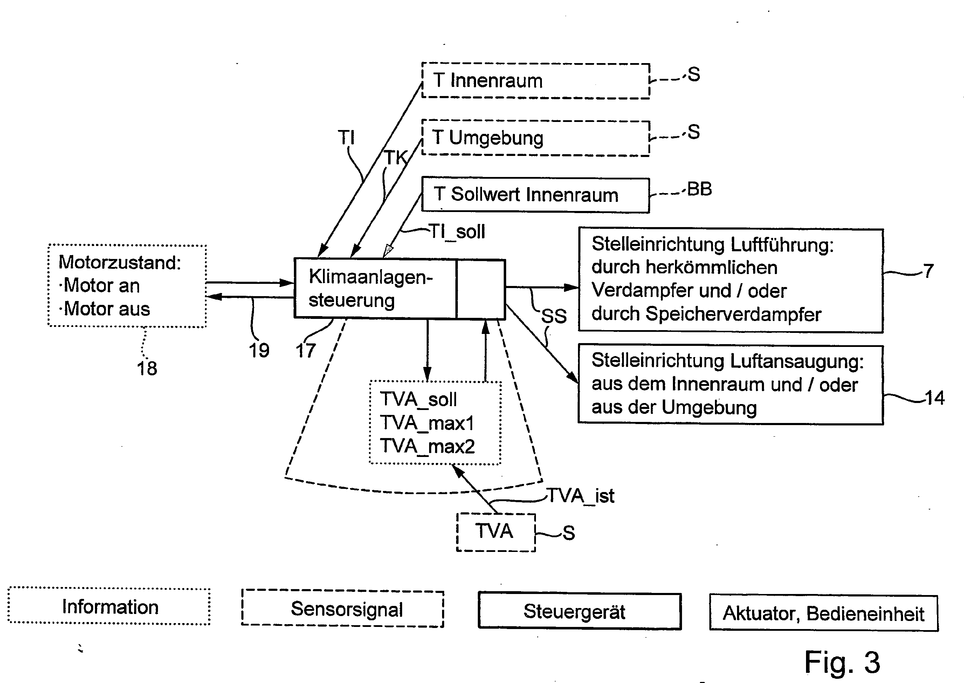

In der Figur 3 wird beispielhaft anhand einer schematischen Darstellung die motorzustandsabhängige und adaptive temperaturabhängige Steuerung der Klimaanlage für die vorgenannten Ausführungsformen beschrieben. Dazu umfasst die Klimaanlage ein Steuergerät 17 (im weiteren Klimasteuergerät 17 genannt), welches beispielsweise mit einem Steuergerät 18 (im weiteren Motorsteuergerät 18 genannt) für den nicht näher dargestellten Motor des Fahrzeugs verbunden ist. Die beiden Steuergeräte 17 und 18 sind beispielsweise über eine Datenübertragungseinheit 19, z.B. einen fahrzeugeigenen CAN-Bus, miteinander verbunden. Alternativ können die beiden Steuergeräte 17 und 18 auch eine Einheit bilden.

Zur Steuerung der Klimaanlage werden dem Klimasteuergerät 17 mindestens ein Motorzustandssignal MS zugeführt. Je nach Art und Ausbildung kann das Motorzustandssignal MS von einem Sensor direkt dem Klimasteuergerät 17 und/oder indirekt über das Motorsteuergerät 18 zugeführt werden. Das Motorzustandssignal MS ist beispielsweise ein mittels eines Sensors erfasstes Messsignal, z.B. "Motordrehzahl", "Motor Ein", "Motor Aus", "Zündung Ein", "Zündung Aus".

Zusätzlich wird dem Klimasteuergerät 17 direkt ein mittels eines Sensors S erfasstes Messsignal für die Innenraumtemperatur TI, die Außentemperatur TU und mittels eines Aktuators oder einer Bedieneinheit BB erfasster Sollwert TI_SOLL für die Innenraumtemperatur TI zugeführt. Bei dem Sollwert TI_SOLL für die Innenraumtemperatur TI handelt es sich um einen manuell von einem Fahrzeuginsassen eingestellten Wert für die gewünschte Innenraumtemperatur TI oder um einen automatisch anhand von Umgebungswerten ermittelten optimalen Wert für die Innenraumtemperatur TI.

Anhand des Motorzustandssignals MS oder zusätzlich in Abhängigkeit von der Innenraumtemperatur TI, der Außentemperatur TU (auch Umgebungstemperatur genannt) sowie des Sollwerts TI_SOLL für die Innenraumtemperatur TI wird mittels des Klimasteuergeräts 17 ein Sollwert TVA_SOLL für die Verdampfer-Austrittstemperatur TVA bestimmt. Dazu wird das Motorzustandssignal MS und ggf. die erfassten Werte für die Innenraumtemperatur TI, die Außentemperatur TU und den Sollwert TI_SOLL beispielsweise anhand von hinterlegten Funktionen, wie z.B. Funktionen für verschiedene Betriebsmoden, wie z.B. Idle-Stopp-Modus, oder Modelldaten derart verarbeitet, dass ein erster Maximalwert TVA_MAX1 und ein zweiter Maximalwert TVA_MAX2 der Verdampfer-Austrittstemperatur TVA bestimmt und vorgegeben wird, der eine langanhaltende Klimatisierung auch im Motorstillstand ermöglicht. Anhand des ermittelten Sollwerts TVA_SOLL bzw. der Maximalwerte TVA_MAX1 und TVA_MAX2 für die Verdampfer-Austrittstemperatur TVA wird mindestens eine der Stelleinrichtungen 7 oder 14 zur Steuerung der Luftansaugung LA bzw. des Luftdurchsatzes LD durch den Verdampfer 1, insbesondere durch dessen Segmente anhand eines zugehörigen Steuersignals SS entsprechend gesteuert. Dazu ist das Klimasteuergerät 17 direkt mit der ersten Stelleinrichtung 7 und mit der zweiten Stelleinrichtung 14 verbunden. Hierzu wird des Weiteren dem Klimasteuergerät 17 der mittels eines weiteren Sensors S erfasste Istwert TVA_IST der Verdampfer-Austrittstemperatur TVA zugeführt. Je nach Art und Ausführung ist zur Erfassung des Istwerts TVA_IST der Verdampfer-Austrittstemperatur TVA mindestens ein Sensor S in Strömungsrichtung 5 der Luft L gesehen unmittelbar am Ausgang des Verdampfers 1, insbesondere am Ausgang eines der Segmente 1a bzw. 1 b angeordnet.

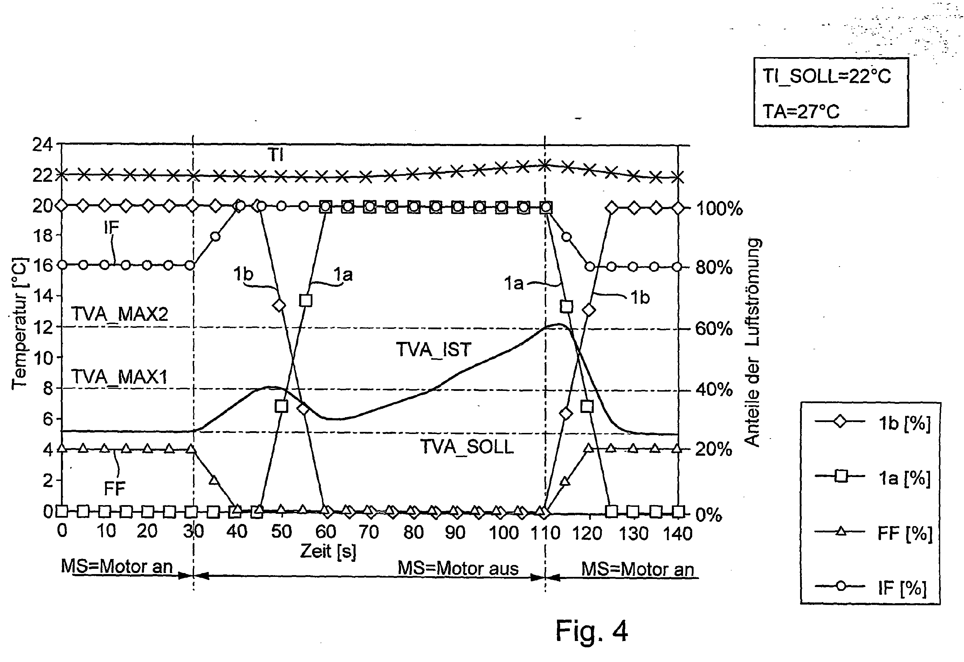

Die erfindungsgemäße adaptive Steuerung des Luftdurchsatzes LD und der Luftansaugung LA mittels des Motorzustandssignals MS oder zusätzlich in Abhängigkeit von der Innentemperatur TI, der Außentemperatur TA und dem Sollwert TI_SOLL der Innentemperatur TI zur Bestimmung der Führungsgröße - der Verdampfer-Austrittstemperatur TVA und/oder des ersten und zweiten Maximalwerts TVA_MAX1 bzw. TVA_MAX2 - wird anhand der in Figur 4 dargestellten Funktionsverläufe für verschiedene Betriebsverfahren näher erläutert.

Im Betrieb des Fahrzeugs 1 wird mittels des Motorzustandssignals MS identifiziert, dass der Motor läuft. Üblicherweise durchströmt die Luft L hierbei das Verdampfersegment 1a des Verdampfers 1. Dabei wird der Sollwert TVA_SOLL für die Verdampfer-Austrittstemperatur TVA beispielsweise mittels Einstellung der Verdichterleistung des Kältemittelverdichters für das Kältemittel KK eingestellt. Zur Vermeidung einer Aufwärmung des als Kältemittelverdampfer ausgebildeten Speicherverdampfersegment 1a wird anhand des Steuersignals S der Luftdurchsatz LD durch den Verdampfer 1 derart gesteuert, dass lediglich der Luft L durch das Verdampfersegment 1b strömt. Das Speicherverdampfersegment 1a ist durch entsprechende Stellung der zweiten Stelleinrichtung 14 gesperrt und wird nicht von Luft L durchströmt. In der Figur 4 ist dies beispielhaft für den Zeitbereich von 0 bis 30s dargestellt.

Wird nun das Fahrzeug abgestellt oder hält das Fahrzeug beispielsweise an einer Ampel und der Motor wird ausgeschaltet, so wird mittels des Steuergeräts 17 anhand des betreffenden Steuersignals S solange der Luftdurchsatz LD durch den Verdampfer 1, d.h. die Luft L durch das Verdampfersegment 1 b geführt, bis der Istwert TVA_IST der Verdampfer-Austrittstemperatur TVA gleich oder größer als der erste Maximalwert TVA_MAX1 ist. In Figur 4 ist dies im Zeitbereich von 30s bis 45s dargestellt. Bei Gleichheit oder Überschreitung des ersten Maximalwerts TVA_MAX1 wird mittels des Steuersignals S durch das Klimasteuergerät 1 der Luftdurchsatz LD vom Verdampfersegment 1b auf das Speicherverdampfersegment 1a durch Änderung der Stellung der zweiten Stelleinrichtung 14 umgeleitet. Je nach Art und Ausbildung kann die Umleitung des Luftdurchsatzes LD wie oben bereits allgemein beschrieben gleitend oder schrittweise erfolgen. Dies erfolgt im Zeitbereich von 45s bis 60s nach Figur 4. Durch die Führung der Luft L nunmehr durch das Kältemittel KK speichernde Speicherverdampfersegment 1a im Stillstand des Fahrzeugs ist weiterhin sichergestellt, dass immer noch ausreichend gekühlte und entfeuchtete Luft L in die Belüftungsräume R1, R2, R3 des Fahrzeuginnenraums gelangt. In der Figur 4 ist dies beispielhaft anhand des Zeitbereichs von 60s bis 110s dargestellt.

Mittels des Klimasteuergeräts 17 wird auch bei Stillstand des Fahrzeugs die Verdampfer-Austrittstemperatur TVA überwacht. Übersteigt der Istwert TVA_IST der Verdampfer-Austrittstemperatur TVA den zweiten Maximalwert TVA_MAX2, so wird im Idie-Stop-Betrieb des Fahrzeugs dieses wieder gestartet, so dass auch der Kältemittelverdichter gestartet und der Luftdurchsatz LD schrittweise oder gleitend vom Speicherverdampfersegment 1a auf das Verdampfersegment 1 b umgeleitet wird durch entsprechende Änderung der Stellung der zweiten Stelleinrichtung 14 anhand eines betreffenden Steuersignals S. In der Figur 4 wird beispielhaft anhand des Zeitbereichs von 30s bis 110s die Überwachung während des Fahrzeugstillstands und anhand des Zeitbereichs von 110s und später die Wiedereinschaltung des Motors und die Umleitung des Luftdurchsatzes LD dargestellt.

Alternativ oder zusätzlich zur Steuerung des Luftdurchsatz LD durch den segmentierten Verdampfer 1 kann die Luftansaugung LA anhand der Änderung der Stellung der ersten Stelleinrichtung 7 mittels des Klimasteuergeräts 17 - motorzustandsabhängig und temperaturabhängig - verändert werden. Dabei wird bei einer gegenüber der Außentemperatur TA niedrigeren Innentemperatur TI die Luftansaugung LA zumindest teilweise auf Umluft oder Innenluft IF durch entsprechende Stellung der ersten Stelleinrichtung 7 eingestellt. Hierdurch ist sichergestellt, dass durch Zuführung bereits warmer Luft L die im Verdampfer 1 gespeicherte Kälte bei abgeschaltetem Motor nicht zu schnell und unnötig verbraucht wird, indem die kältere Luft L dem Verdampfer 1 zugeführt wird. Dabei kann je nach Stellung der ersten Steuereinrichtung 7 als Luft L vollständig Innenluft IF dem Strömungskanal 9 zugeführt werden. Da aber dem Fahrzeuginnenraum zur angenehmen Klimatisierung auch Frischluft FF zugeführt werden sollte, kann auch ein Mischbetrieb eingestellt werden, bei welchem beispielsweise 20% Frischluft FF und 80% Innenluft IF dem Verdampfer 1 zugeführt werden. Im umgekehrten Fall, in welchem die Außentemperatur TA niedriger als die Innentemperatur TI ist, wird die Luftansaugung LA bevorzugt vollständig auf Außen- oder Frischluft FF umgestellt.

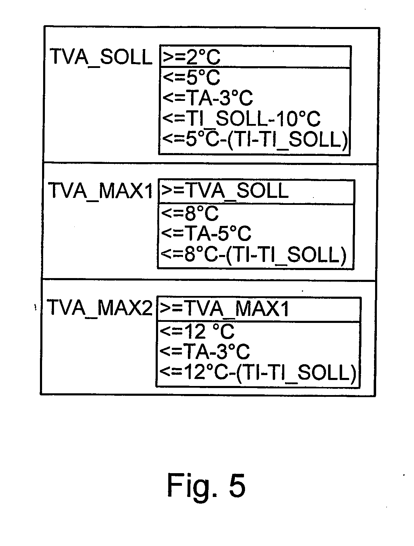

Abschließend wird in Figur 5 anhand einer Tabelle der funktionale Zusammenhang zur Bestimmung der Führungsgrößen, d.h. des Sollwerts TVA_SOLL und/oder des ersten und des zweiten Maximalwertes TVA_MAX1 bzw. TVA_MAX2 für die Verdampfer-Austrittstemperatur TVA, in Abhängigkeit von den zusätzlichen Größen wie Außenraumtemperatur TA, Innenraumtemperatur TI und Sollwert TI_SOLL für die Innenraumtemperatur TI dargestellt. Dabei wird der Sollwert TVA_SOLL für die Verdampfer-Austrittstemperatur TVA eingestellt in einem Temperaturbereich von größer gleich 2°C und kleiner gleich 5°C, wobei der Sollwert TVA_SOLL kleiner gleich als die Differenz von Außentemperatur TA und -3°C bzw. kleiner gleich als die Differenz des Sollwerts TI_SOLL der Innenraumtemperatur TI und -10°C bzw. kleiner gleich als die Differenz von 5°C und dem Sollwert TI_SOLL für die Innenraumtemperatur TI und die Innenraumtemperatur TI ist. Analog dazu werden die zwei Maximalwerte TVA_MAX1 und TVA_MAX2 der Verdampfer-Austrittstemperatur TVA für andere Temperaturbereiche bestimmt, wobei der erste Maximalwert TVA_MAX2 größer dem zweiten Maximalwert TVA_MAX1 größer dem Sollwert TVA_SOLL ist.

### Bezugszeichenliste

- 1: Verdampfer
- 1a, 1b: Verdampfersegmente
- 2: Flachrohre
- 3: Kältespeicher
- 4: Wellrippen
- 5: Strömungsrichtung
- 6: Gebläse
- 7: erste Stelleinrichtung
- 8: Heizkörper
- 9: Strömungskanal
- 10: Kältemittelkreislauf
- 11: Kältemitteleinlass
- 12: Kältemittelauslauss
- 13: Kältemittelventil
- 14: zweite Stelleinrichtung
- 17: Klimasteuergerät
- 18: Motorsteuergerät
- 19: Datenübertragungseinheit
- BB: Aktuator oder Bedieneinheit
- FF: Frischluft oder Außenluft
- IF: Umluft oder Innenraumluft
- L: Luftstrom
- LA: Luftansaugung
- LD: Luftdurchsatz
- KK: Kältemittelkreislauf
- S: Sensor
- TI: Innenraumtemperatur
- TI_SOLL: Sollwert für die Innenraumtemperatur
- TU: Außentemperatur (= Umgebungstemperatur)
- TVA: Verdampfer-Austrittstemperatur
- TVA_IST: Istwert der Verdampfer-Austrittstemperatur
- TVA_MAX1: erster Maximalwert für die Verdampfer-Austrittstemperatur
- TVA_MAX2: zweiter Maximalwert für die Verdampfer-Austrittstemperatur
- TVA_SOLL: Sollwert für die Verdampfer-Austrittstemperatur

## Patentansprüche

1. Klimaanlage für ein Fahrzeug zum Führen und Konditionieren eines Luftstroms (L) mit einem Steuergerät (17) zur Steuerung eines in einem Strömungskanal (9) angeordneten sowie in einen Kältemittelkreislauf (10) geschalteten Verdampfers (1, 1a, 1b), mit einer ersten Stelleinrichtung (7) zur Regulierung der Luftansaugung (LA) sowie mit einer zweiten Stelleinrichtung (14) zur Regulierung des Luftdurchsatzes (LD) im Verdampfer (1, 1a, 1b), wobei das Steuergerät (17) mittels eines über einen Motorzustandssignalsensor erfassten Motorzustandssignals (MS) mittels einer Sollwertbestimmungseinrichtung einen Sollwert (TVA_SOLL) für die Verdampfer-Austrittstemperatur (TVA) bestimmt, anhand dessen mindestens eine der Stelleinrichtungen (7, 14) vom Steuergerät (17) angesteuert wird,
**dadurch gekennzeichnet,**
**dass** der Verdampfer (1, 1a, 1b) segmentiert ausgebildet ist, wobei wenigstens ein Verdampfersegment als Speicherverdampfersegment (1a) ausgebildet ist und die zweite Stelleinrichtung (14) derart ausgebildet und eingerichtet ist, dass sie den Luftdurchsatz (LD) durch den Verdampfer und die Verdampfersegmente (1, 1a, 1b) steuert.

2. Klimaanlage nach Anspruch 1,
**dadurch gekennzeichnet,**
**dass** das Steuergerät (17) den Sollwert (TVA_SOLL) für die Verdampfer-Austrittstemperatur (TVA) in Abhängigkeit von der Außentemperatur (TU), der Innenraumtemperatur (TI) und/oder von einem vorgegebenen Sollwert (TI_SOLL) für die Innenraumtemperatur (TI) bestimmt.

3. Klimaanlage nach Anspruch 1 oder 2,
**dadurch gekennzeichnet,**
**dass** mindestens ein Temperatursensor (S) zur Erfassung des Istwertes (TVA_IST) der Verdampfer-Austrittstemperatur (TVA) am Verdampferaustritt angeordnet ist.

4. Klimaanlage nach einem der vorhergehenden Ansprüche 1 bis 3,
**dadurch gekennzeichnet,**
**dass** das Steuergerät (17) einen ersten Maximalwert (TVA_MAX1) und einen zweiten Maximalwert (TVA_MAX2) der Verdampfer-Austrittstemperatur (TVA) bestimmt.

5. Klimaanlage nach Anspruch 4,
**dadurch gekennzeichnet,**
**dass** das Steuergerät (17) den ersten Maximalwert (TVA_MAX1) und den zweiten Maximalwert (TVA_MAX2) in Abhängigkeit von Außentemperatur (TU), Innenraumtemperatur (TI) sowie von einem vorgegebenen Sollwert (TI_SOLL) für die Innenraumtemperatur (TI) bestimmt.

6. Klimaanlage nach einem der vorhergehenden Ansprüche 1 bis 5,
**dadurch gekennzeichnet,**
**dass** das Steuergerät (17) mit der ersten Stelleinrichtung (7) zur Steuerung der Luftansaugung (LA) von innen und/oder von außen verbunden ist.

7. Verfahren zum Betrieb einer Klimaanlage (1) nach einem der Ansprüche 1 bis 6 für ein Fahrzeug, wobei anhand eines Motorzustandssignals (MS) (MS) ein Sollwert (TVA_SOLL) für die Verdampfer-Austrittstemperatur (TVA) bestimmt wird, anhand dessen der Luftdurchsatz (LD) durch einen Verdampfer (1, 1a, 1b) und/oder die Luftansaugung (LA) eingestellt wird, wobei bei erfasstem Motorstoppsignal und bei Erreichen und/oder Überschreiten eines ersten Maximalwerts (TVA_MAX1) durch den Istwert (TVA_IST) der Verdampfer-Austrittstemperatur (TVA) der Luftdurchsatz (LD) vom Verdampfersegment (1b) auf ein Speicherverdampfersegment (1 a) des Verdampfers (1, 1 a, 1 b) umgeleitet wird.

8. Verfahren nach Anspruch 7, bei dem der Sollwert (TVA_SOLL) für die Verdampfer-Austrittstemperatur (TVA) in Abhängigkeit von der Außentemperatur (TU), der Innenraumtemperatur (TI) und/oder von einem vorgegebenen Sollwert (TI_SOLL) für die Innenraumtemperatur (TI) bestimmt wird.

9. Verfahren nach Anspruch 7 oder 8, bei dem ein Istwert (TVA_IST) für die Verdampfer-Austrittstemperatur (TVA) erfasst wird.

10. Verfahren nach einem der vorhergehenden Ansprüche 7 bis 9, bei dem als Sollwert (TVA_SOLL) für die Verdampfer-Austrittstemperatur (TVA) ein erster Maximalwert (TVA_MAX1) und ein zweiter Maximalwert (TVA_MAX2) bestimmt werden.

11. Verfahren nach einem der vorhergehenden Ansprüche 7 bis 10, bei dem der erste Maximalwert (TVA_MAX1) und der zweite Maximalwert (TVA_MAX2) in Abhängigkeit von der Außentemperatur (TU), der Innenraumtemperatur (TI) sowie von einem vorgegebenen Sollwert (TI_SOLL) für die Innenraumtemperatur (TI) bestimmt wird.

12. Verfahren nach einem der vorhergehenden Ansprüche 9 bis 11, bei dem als Motorzustandssignal (MS) ein Motorstopp- oder Motorstartsignal erfasst wird.

13. Verfahren nach einem der vorhergehenden Ansprüche 7 bis 12, bei dem in Abhängigkeit vom Motorzustandssignal (MS) ein Verdampfer (1, 1a, 1 b) zumindest teilweise luftseitig gesperrt und/oder geöffnet wird.

14. Verfahren nach einem der vorgehenden Ansprüche 7 bis 13, bei dem bei einem erfassten Motorstartsignal ein Verdampfersegment (1a) des Verdampfers (1, 1a, 1b) von Luft (L) durchströmt wird.

15. Verfahren nach einem der vorhergehenden Ansprüche 7 bis 14, bei dem bei erfassten Motorstoppsignal und bei Erreichen und/oder Überschreiten des zweiten Maximalwerts (TVA_MAX2) durch den Istwert (TVA_IST) der Verdampfer-Austrittstemperatur (TVA) der Motor gestartet und der Luftdurchsatz (LD) vom Speicherverdampfsegment (1a) auf ein Verdampfersegment (1b) des Verdampfers (1, 1a, 1b) umgeleitet wird.

16. Verfahren nach einem der vorhergehenden Ansprüche 7 bis 15, bei dem der Verdampfer (1, 1a, 1b) kontinuierlich oder schrittweise gesperrt und/oder geöffnet wird.

17. Verfahren nach einem der vorhergehenden Ansprüche 7 bis 16, bei dem ein den Verdampfer (1, 1a, 1b) durchströmender Luftstrom (L) thermostatisch, druckgesteuert, temperaturgesteuert und/oder statisch eingestellt wird.

18. Verfahren nach einem der vorhergehenden Ansprüche 7 bis 17, bei dem bei einer gegenüber der Innenraumtemperatur (TI) niedrigeren Außentemperatur (TA) die Luftansaugung (LA) vollständig auf Außenluft (FF) eingestellt wird.

19. Verfahren nach einem der vorhergehenden Ansprüche 7 bis 18, bei dem bei einer gegenüber der Außentemperatur (TA) niedrigeren Innenraumtemperatur (TI) die Luftansaugung (LA) zumindest teilweise auf Innenluft (IF) eingestellt wird.

20. Verfahren nach Anspruch 19, bei dem bei einer gegenüber der Außentemperatur (TA) niedrigeren Innenraumtemperatur (TI) und bei erfasstem Motorstoppsignal die Luftansaugung (LA) vollständig auf Innenluft (IF) eingestellt wird.

## Claims

1. An air conditioning system for a vehicle for directing and conditioning an air flow (L) having a control device (17) to control an evaporator (1, 1a, 1b) positioned in a flow channel (9) and connected to a refrigerant circuit (10), a first adjusting device (7) for regulating the air intake (LA) and a second adjusting device (14) for regulating the air throughput (LD) in the evaporator (1, 1a, 1b), the control device (17) determining a reference value (TVA_SOLL) for the evaporator delivery temperature (TVA) by means of an engine status signal (MS) detected by an engine status signal sensor by means of a reference value determination device, at least one of the adjusting devices (7, 14) being actuated by the control device (17) using said reference value (TVA_SOLL) for the evaporator delivery temperature (TVA),
**characterised in that**
the evaporator (1, 1a, 1b) is designed in segments, at least one evaporator segment being designed as a storage evaporator segment (1a) and the second adjusting device (14) being designed and configured in such a manner that it controls the air throughput (LD) through the evaporator and the evaporator segments (1, 1a, 1b).

2. An air conditioning system in accordance with claim 1,
**characterised in that**
the control device (17) determines the reference value (TVA_SOLL) for the evaporator delivery temperature (TVA) dependent on the exterior temperature (TU), the interior temperature (TI) and/or a predetermined reference value (TI_SOLL) for the interior temperature (TI).

3. An air conditioning system in accordance with claim 1 or 2,
**characterised in that**
at least one temperature sensor (S) is positioned at the evaporator outlet to detect the actual value (TVA_IST) of the evaporator delivery temperature (TVA).

4. An air conditioning system in accordance with one of the preceding claims 1 to 3,
**characterised in that**
the control device (17) determines a first maximum value (TVA_MAX1) and a second maximum value (TVA_MAX2) for the evaporator delivery temperature (TVA).

5. An air conditioning system in accordance with claim 4,
**characterised in that**
the control device (17) determines the first maximum value (TVA_MAX1) and the second maximum value (TVA_MAX2) dependent on the exterior temperature (TU), the interior temperature (TI) and a predetermined reference value (TI_SOLL) for the interior temperature (TI).

6. An air conditioning system in accordance with one of the preceding claims 1 to 5,
**characterised in that**
the control device (17) is connected to the first adjusting device (7) from the inside and/or from the outside to control the air intake (LA).

7. A process for operating an air conditioning system in accordance with one of claims 1 to 6,
a reference value (TVA_SOLL) for the evaporator delivery temperature (TVA) being determined using an engine status signal (MS), said reference value (TVA_SOLL) in turn being used to adjust the air throughput (LD) through an evaporator (1, 1a, 1b) and/or the air intake (LA), when an engine stop signal is detected and the actual value (TVA_IST) for the evaporator delivery temperature (TVA) reaches and/or exceeds a first maximum value (TVA_MAX1) the air throughput (LD) being diverted from the evaporator segment (1b) to a storage evaporator segment (1a) of the evaporator (1, 1a, 1b).

8. A process in accordance with claim 7,
in which the reference value (TVA_SOLL) for the evaporator delivery temperature (TVA) is determined dependent on the exterior temperature (TU), the interior temperature (TI) and/or a predetermined reference value (TI_SOLL) for the interior temperature (TI).

9. A process in accordance with claim 7 or 8,
in which an actual value (TVA_IST) is detected for the evaporator delivery temperature (TVA).

10. A process in accordance with one of the preceding claims 7 to 9,
in which a first maximum value (TVA_MAX1) and a second maximum value (TVA_MAX2) are determined as reference values (TVA_SOLL) for the evaporator delivery temperature (TVA).

11. A process in accordance with one of the preceding claims 7 to 10,
in which the first maximum value (TVA_MAX1) and the second maximum value (TVA_MAX2) are determined dependent on the exterior temperature (TU), the interior temperature (TI) and a predetermined reference value (TI_SOLL) for the interior temperature (TI).

12. A process in accordance with one of the preceding claims 9 to 11,
in which the engine status signal (MS) detected is an engine stop signal or an engine start signal.

13. A process in accordance with one of the preceding claims 7 to 12,
in which the air side of an evaporator (1, 1a, 1b) is at least partially closed and/or opened dependent on the engine status signal (MS).

14. A process in accordance with one of the preceding claims 7 to 13,
in which air (L) flows through an evaporator segment (1a) of the evaporator (1, 1a, 1b) when an engine start signal is detected.

15. A process in accordance with one of the preceding claims 7 to 14,
in which the engine is started and the air throughput (LD) is diverted from the storage evaporator segment (1a) to an evaporator segment (1b) of the evaporator (1, 1a, 1b) when the actual value (TVA_IST) of the evaporator delivery temperature (TVA) reaches and/or exceeds the second maximum value (TVA_MAX2).

16. A process in accordance with one of the preceding claims 7 to 15,
in which the evaporator (1, 1a, 1b) is closed and/or opened continuously or in stages.

17. A process in accordance with one of the preceding claims 7 to 16,
in which a flow of air (L) flowing through the evaporator (1, 1a, 1b) is adjusted thermostatically, by pressure control, by temperature control and/or statically.

18. A process in accordance with one of the preceding claims 7 to 17,
in which the air intake (LA) is set completely to exterior air (AF) if the exterior temperature (TA) is lower than the interior temperature (TI).

19. A process in accordance with one of the preceding claims 7 to 18,
in which the air intake (LA) is set at least partially to interior air (IF) if the exterior temperature (TA) is lower than the interior temperature (TI) adjusted.

20. A process in accordance with claim 19,
in which the air intake (LA) is set completely to interior air (IF) if the exterior temperature (TA) is lower than the interior temperature (TI) and the engine stop signal has been detected.

## Revendications

1. Installation de climatisation pour un véhicule destiné au guidage et au conditionnement d'un flux d'air (L) avec un appareil de commande (17) pour la commande d'un évaporateur (1, 1a, 1b) disposé dans un canal d'écoulement (9) et monté dans un circuit de réfrigérant (10) avec un premier dispositif de réglage (7) pour la régulation de l'admission d'air (LA) et avec un second dispositif de réglage (14) pour la régulation du débit d'air (LD) dans l'évaporateur (1, 1a, 1b), l'appareil de commande (17) déterminant une valeur de consigne (TVA_SOLL) pour la température de sortie de l'évaporateur (TVA) au moyen d'un signal d'état de moteur (MS) détecté par un capteur de signal d'état du moteur à l'aide d'un dispositif de détermination de valeur de consigne, valeur à l'aide de laquelle au moins l'un des dispositifs de réglage (7, 14) est activé par l'appareil de commande (17), **caractérisée en ce que** l'évaporateur (1, 1a, 1b) est conçu de façon segmentée, au moins un segment d'évaporateur étant conçu comme segment d'évaporateur accumulateur (1a) et le second dispositif de réglage (14) étant conçu et aménagé de telle sorte qu'il commande le débit d'air (LD) en traversant l'évaporateur et les segments d'évaporateur (1, 1a, 1b).

2. Installation de climatisation selon la revendication 1, **caractérisée en ce que** l'appareil de commande (17) détermine la valeur de consigne (TVA_SOLL) pour la température de sortie d'évaporateur (TVA) en fonction de la température extérieure (TU), de la température d'espace intérieur (TI) et/ou d'une valeur de consigne (TI_SOLL) prédéfinie pour la température de l'espace intérieur (TI).

3. Installation de climatisation selon la revendication 1 ou 2, **caractérisée en ce que** au moins un capteur de température (S) est disposé sur la sortie d'évaporateur pour la détection de la valeur réelle (TVA_IST) de la température de sortie d'évaporateur (TVA).

4. Installation de climatisation selon l'une quelconque des revendications 1 à 3 précédentes, **caractérisée en ce que** l'appareil de commande (17) détermine une première valeur maximale (TVA_MAX1) et une seconde valeur maximale (TVA_MAX2) de la température de sortie d'évaporateur (TVA).

5. Installation de climatisation selon la revendication 4, **caractérisée en ce que** l'appareil de commande (17) détermine la première valeur maximale (TVA_MAX1) et la seconde valeur maximale (TVA_MAX2) en fonction de la température extérieure (TU), de la température d'espace intérieur (TI) et d'une valeur de consigne (TI_SOLL) prédéfinie pour la température de l'espace intérieur (TI).

6. Installation de climatisation selon l'une quelconque des revendications 1 à 5 précédentes, **caractérisée en ce que** l'appareil de commande (17) est relié par l'intérieur et/ou par l'extérieur au premier dispositif de réglage (7) pour la commande de l'aspiration d'air (LA).

7. Procédé pour l'exploitation d'une installation de climatisation (1) selon l'une quelconque des revendications 1 à 6 pour un véhicule, une valeur de consigne (TVA_SOLL) pour la température de sortie d'évaporateur (TVA) étant définie à l'aide d'un signal d'état de moteur (MS), valeur à l'aide de laquelle le débit d'air (LD) est réglé par un évaporateur (1, 1a, 1b) et/ou l'aspiration d'air (LA), le débit d'air (LD) étant dévié du segment d'évaporateur (1b) sur un segment d'évaporateur accumulateur (1a) de l'évaporateur (1, 1a, 1b) lorsque le signal d'arrêt du moteur est détecté et lorsqu'une première valeur maximale (TVA_MAX1) est atteinte et/ou dépassé par la valeur réelle (TVA_IST) de la température de sortie d'évaporateur (TVA).

8. Procédé selon la revendication 7, dans lequel la valeur de consigne (TVA_SOLL) pour la température de sortie d'évaporateur (TVA) est déterminée en fonction de la température extérieure (TU), de la température d'espace intérieur (TI) et/ou d'une valeur de consigne (TI_SOLL) prédéfinie pour la température d'espace intérieur (TI).

9. Procédé selon la revendication 7 ou 8, dans lequel une valeur réelle (TVA_IST) pour la température de sortie évaporateur (TVA) est détectée.

10. Procédé selon l'une quelconque des revendications 7 à 9 précédentes, dans lequel, comme valeur de consigne (TVA_SOLL) pour la température de sortie d'évaporateur (TVA), une première valeur maximale (TVA_MAX1) et une seconde valeur maximale (TVA_MAX2) sont déterminées.

11. Procédé selon l'une quelconque des revendications 7 à 10 précédentes, dans lequel la première valeur maximale (TVA MAX1) et la seconde valeur maximale (TVA_MAX2) sont déterminées en fonction de la température extérieure (TU), de la température intérieure (TI) ainsi que d'une valeur de consigne (TI_SOLL) prédéfinie pour la température d'espace intérieur (TI).

12. Procédé selon l'une quelconque des revendications 9 à 11 précédentes, dans lequel un signal d'arrêt de moteur ou un signal de démarrage de moteur est détecté en tant que signal d'état du moteur (MS).

13. Procédé selon l'une quelconque des revendications 7 à 12 précédentes, dans lequel un évaporateur (1, 1a, 1b) est fermé et/ou ouvert au moins partiellement côté air en fonction du signal d'état du moteur (MS).

14. Procédé selon l'une quelconque des revendications 7 à 13 précédentes, dans lequel, lorsqu'un signal d'arrêt de moteur est détecté, un segment d'évaporateur (1a) de l'évaporateur (1, 1a, 1b) est traversé par de l'air (L).

15. Procédé selon l'une quelconque des revendications 7 à 14 précédentes, dans lequel, lorsque le signal d'arrêt de moteur est détecté et lorsque la seconde valeur maximale (TVA_MAX2) est atteinte et/ou dépassée par la valeur réelle (TVA_IST) de la température de sortie d'évaporateur (TVA), le moteur est démarré et le débit d'air (LD) est dévié du segment d'évaporateur accumulateur (1a) sur un segment d'évaporateur (1b) de l'évaporateur (1, 1a, 1b).

16. Procédé selon l'une quelconque des revendications 7 à 15 précédentes, dans lequel l'évaporateur (1, 1a, 1b) est bloqué et/ou ouvert de façon continue ou progressive.

17. Procédé selon l'une quelconque des revendications 7 à 16 précédentes, dans lequel un flux d'air (L) traversant l'évaporateur (1, 1a, 1b) est commandé par pression de façon thermostatique, commandé par température et/ou réglé de façon statique.

18. Procédé selon l'une quelconque des revendications 7 à 17 précédentes, dans lequel l'aspiration d'air (LA) est réglée complètement sur l'air extérieur (FF) dans le cas d'une température d'air extérieur (TA) plus faible par rapport à la température d'espace intérieur (TI).

19. Procédé selon l'une quelconque des revendications 7 à 18 précédentes, dans lequel, dans le cas d'une température d'espace intérieur (TI) plus faible par rapport à la température extérieure (TA), l'aspiration d'air (LA) est réglée au moins partiellement sur l'air intérieur (IF).

20. Procédé selon la revendication 19, dans lequel, dans le cas d'une température d'espace intérieur (TI) plus faible par rapport à l'air à la température extérieure (TA) et dans le cas d'une détection du signal d'arrêt du moteur, l'aspiration d'air (LA) est réglée complètement sur l'air intérieur (IF).
